# EUROPEAN PATENT APPLICATION

(11) **EP 4 036 345 A1**
(43) Date of publication of application: **03.08.2022**
(21) Application number: 22154504.9
(22) Date of filing: 01.02.2022
(51) Int. Cl.: E04F 11/18, B32B 17/10, C03C 27/10, E06B 3/66, E06B 3/677, B32B 17/06, C09K 21/00

(54) **GLASS BALUSTRADE**

(30) Priority: 02.02.2021 GB 202101423
(71) Applicant: Pyroguard UK Limited, Haydock, St. Helens WA11 9GA (GB)
(72) Inventor: Ainsworth, Richard, Saint Helens, WA11 9GA (GB); Crook, Vincent, Saint Helens, WA11 9GA (GB); Lake, Andrew, Saint Helens, WA11 9GA (GB)
(74) Representative: Alembia Intellectual Property Limited

(57) **Abstract**

This specification discloses a balustrade comprising a non-flammable glazing laminate fixed in position by a suitable support.

## Description

### FIELD

This specification relates to glass balustrades.

### BACKGROUND

Balustrades are architectural features that often take the form of a railing supported by a series of posts ("balusters") and/or panels (such as metal mouldings or glazings) fixed onto a suitable support structure. While they often form ornamental parapets to balconies, bridges and other elevated landings, the primary role of a balustrade is safety, and in particular as a bulwark preventing users from falling from a height.

Given this purpose, modern balustrades must meet a series of stringent safety criteria, including the ability to support a suitable load leaning (or falling) against them. While attractive from a design perspective, glass balustrades can struggle to meet such criteria. Historically, monolithic glass panels have been used to impart the necessary load bearing strength, but such glazings may shatter if subjected to impact stress (a particular hazard for external balustrades overhanging busy public walkways).

To address these issues, glazing laminates comprising panes of glass sandwiching a suitable interlayer have been used as support or infill panels for balustrades. The interlayer used is commonly based on polyvinyl butyral (PVB), which provides additional load bearing strength and prevents the attached glass panes from shattering when impacted. However, PVB is flammable, and it is desirable to minimise the use of such materials in construction following tragedies such as the 2017 Grenfell Tower fire (https://en.wikipedia.org/wiki/Grenfell Tower fire), where flammable external cladding was implicated.

As a result, there is a need for new types of glass balustrade with the necessary load bearing and impact resistance properties that are also fire safe. The inventors of the present specification have determined that balustrades featuring glazing laminates that comprise a suitable non-flammable interlayer can address these issues, providing constructions that are:
- **Able to bear a suitable load** (for example meeting BS 6180:2011, EN 1991-1-1 or equivalent criteria);
- **Soft body impact-resistant** (for example meeting 1B1 criteria in an EN 12600 test or equivalent, where 1B1 indicates that the laminate either passes or breaks sufficiently safely at the most stringent test drop height of 1200mm);
- **Non-flammable** (for example meeting at least A2 classification under BS EN 13501-1 when tested under UNE-EN ISO 1716:2011, UNE-EN 13823:2012+A1:2016or equivalent criteria, and/or for example meeting A2-s1,d0 classification under the same standards, meaning that the material is classed as non-combustible in Scotland and of limited combustibility in England and Wales, emits little or no smoke, and produces no flaming droplets or particles within the first 10 minutes of fire exposure); and
- **Suitable for external use** (since they are sufficiently UV stable and resistant to water ingress).

The fact that it is possible to use the glazing laminates disclosed herein as suitable load bearing elements for balustrades is particularly surprising given that the interlayers in question can rheologically be considered highly viscous liquids, but nevertheless impart sufficient structural resistance to pass current building standards.

### SUMMARY

An objective of the present specification is to provide a glass balustrade that can bear sufficient loads, is impact-resistant and non-flammable, and suitable for external use.

Accordingly, this specification describes, in part, a balustrade as claimed in claim 1.

This specification also describes, in part, a construction as claimed in claim 14.

This specification also describes, in part, the use of a glazing laminate in balustrade construction as claimed in claim 15.

### ILLUSTRATIVE EMBODIMENTS

The invention detailed in this specification should not be interpreted as being limited to any of the explicitly recited embodiments or examples. Other embodiments will be readily apparent to a reader skilled in the art.

### Glass Balustrade

In one embodiment there is provided a balustrade comprising a glazing laminate fixed to a support, the glazing laminate comprising a first pane and a second pane which together enclose a non-flammable interlayer.

In one embodiment there is provided a glazing laminate comprising a first pane and a second pane which together enclose a non-flammable interlayer.

### General Definitions

"A" or "an" mean "at least one". In any embodiment where "a" or "an" are used to denote a given material or element, "a" or "an" may mean one. In any embodiment where "a" or "an" are used to denote a given material or element, "a" or "an" may mean 1, 2, 3, 4, 5, 6, 7, 8, 9, 10, 100, 1000, 10000, 100,000 or 1,000,000 (1 million).

When an embodiment includes "a" or "an" feature X, subsequent referrals to "the" feature X do not imply only one of the feature is present. Instead the above interpretation of "a" or "an" continues to apply so that "the" also means "at least one". In other words, embodiments comprising statements such as "a feature X, where the feature X is..." (or similar syntax) should be construed as "at least one feature X, where the at least one feature X is...".

"Comprising" means that a given embodiment may contain other features. For example, in any embodiment where a material "comprising" certain materials or elements is mentioned, the given material may be formed of at least 10% w/w, at least 20% w/w, at least 30% w/w, or at least 40% w/w of the materials or elements (or combination of materials or elements).

In any embodiment where "comprising" is mentioned, "comprising" may also mean "consisting of" (or "consists of") or "consisting essentially of" (or "consists essentially of").

"Consisting of" or "consists of" a given material or element is formed entirely of the material or element (or combination of materials or elements). In any embodiment where "consisting of" or "consists of" is mentioned the given material or element may be formed of 100% w/w of the material or element.

"Consisting essentially of" or "consists essentially of" means that a given material or element consists almost entirely of that material or element (or combination of materials or elements). In any embodiment where "consisting essentially of" or "consists essentially of" is mentioned the given material or element may be formed of at least 50% w/w, at least 60% w/w, at least 70% w/w, at least 80% w/w, at least 90% w/w, at least 95% w/w or at least 99% w/w of the material or element.

In any embodiment where "is" or "may be" is used to define a material or element, "is" or "may be" may mean the material or element "consists of" or "consists essentially of" the material or element.

When it is mentioned that "in some embodiments..." a certain element may be present, the element may be present in a suitable embodiment in any part of the specification, not just a suitable embodiment in the same section or textual region of the specification.

When a feature is "selected from" a list, the feature is selected from a list consisting of the specified alternatives (i.e. a list of the alternatives specified and no others).

In any embodiment of this specification where "about" is mentioned, "about" may mean +/-0 (i.e. no variance), +/- 0.01, +/- 0.05, +/- 0.1, +/- 0.5, +/-1, +/- 2, +/-5, +/- 10, +/- 20, +/- 50, +/- 100, +/- 500 or +/- 1000 units.

In any embodiment of this specification where "about" is mentioned, "about" may mean +/-0 (i.e. no variance), +/- 0.01%, +/- 0.05%, +/- 0.1%, +/- 0.5%, +/- 1%, +/- 2%, +/-5%, +/- 10%, +/- 20%, +/- 50%, +/- 75%, +/- 90% or +/- 100% of the given value.

In any embodiment of this specification where "about" is mentioned, "about" may mean +/-0% of the given value (i.e. no variance).

In any embodiment of this specification where "about" is mentioned, "about" may mean +/-10% of the given value.

Claims are embodiments.

### Balustrade Support

A balustrade support (for example a base shoe) can take any suitable configuration, as long as it fulfils its purpose of fixing a glazing laminate in place in order that the laminate creates (or helps create) a barrier. Suitable supports include load-bearing framed supports (often comprising a top rail supported by a baluster, with a glazing laminate as an "infill panel" in within the frame) or free-standing supports that use basal structures designed to receive and fix the lower edge of a glazing laminate in place and allow the glazing laminate itself to act as the main load bearing structure.

Supports may be fixed to surfaces (for example floors) by various methods known in the art (for example by way of point fixings such as screws or bolts received by holes e.g. bobbins). Glazing laminates may be fixed to supports by other known methods such as clips, clamps, squeeze fittings, bonding material (e.g. silicone polymers, polysulphide polymers, polyurethane polymers, butyl polymers and/or adhesive tapes), packing (g for example gaskets such as a Q-railing^{®} Easy Glass Prime^{®} rubber sets, packers such as the Q-railing Q-disc System, adhesive tapes, liners and/or beading).

In some embodiments a balustrade may be framed (for example fully framed or partially framed).

In some embodiments a balustrade may be free-standing (i.e. supported only at its base).

In some embodiments a balustrade may comprise a handrail. A handrail may be positioned along the top edge of a balustrade and facilitates grip and therefore its bulwark properties. Suitable handrails include the Q-railing^{®} cap rail and/or Q-railing^{®} edge trim.

In some embodiments a support may comprise a frame (for example a top rail supported by a baluster). A top rail imparts stability to the frame and transmits loading to other parts of the frame (for example balusters) while avoiding transmission to a glazing laminate. Top rails can also have a dual function as handrails.

In some embodiments a support may comprise a top rail.

In some embodiments a support may comprise a baluster.

In some embodiments a support may lack any balusters.

In some embodiments a frame may be selected from a fully-framed, two-edge framed, clip fixed and bolt fixed frame. These types of frames are discussed in Architectural Glazing Systems Chapter 7, "Guidelines for the Use of Glass in Protective Barriers", Glass and Glazing Federation November 2014.

In some embodiments a support may comprise a block shoe. A block shoe is a basal structure designed to be secured to (and/or sunk within) a floor, and is adapted to receive a glazing laminate. Example block shoes include a Q-railing^{®} Easy Glass Prime^{®} base shoe.

In some embodiments a support may comprise a U-shaped channel. A U-shaped channel is conveniently shaped or adapted to receive the lower edge of a typical rectangular sheet glazing laminate and hold it in place.

In some embodiments a support may comprise a U-shaped channel adapted to receive the lower edge of a glazing laminate.

In some embodiments a support may be a block shoe comprising a U-shaped channel.

In some embodiments a support may be a block shoe comprising a U-shaped channel adapted to receive the lower edge of a glazing laminate.

In some embodiments a support may comprise an L-shaped channel. An L-shaped channel is conveniently shaped to receive the front or back portion of the rectangular lower edge of a typical glazing laminate and hold it in place when assisted by additional means such as beading.

In some embodiments a support may be a block shoe comprising an L-shaped channel.

In some embodiments a support may be concrete, brick, plastic, stainless steel or aluminium.

In some embodiments a support may be aluminium.

In some embodiments a support may be fixed to a floor using screws or bolts.

In some embodiments a glazing laminate may be fixed to a support using clips, clamps, squeeze fittings, bonding material, packing, packers, adhesive tapes, liners and/or beading.

In some embodiments a glazing laminate may be fixed to a support using a gasket (such as a Q-railing^{®} Easy Glass Prime^{®} rubber set).

In some embodiments a glazing laminate may be fixed to a support using a packer such as the Q-railing^{®} Q-disc System).

### Glazing Laminate - Panes

A "pane" (for example a first pane and/or a second pane) may comprise any suitable material, such as glass. Panes may be any suitable shape (for instance, square, rectangular, triangular, circular etc.) or may be dimensioned to suit the particular application and shaped irregularly as required. Panes may be of varying thickness or size (e.g. perimeter size, for example about 1000 mm wide × about 1300 high, with the depths/thicknesses discussed elsewhere in the specification). The precise minimum height is often dictated by local building codes or guidance. Panes may adopt various curvatures (e.g. flat or arched) and may exhibit various degrees of transparency. Panes may be patterned or non-patterned, coloured or non-coloured.

In some embodiments a first pane and a second pane may be the same.

In some embodiments a first pane and a second pane may be different.

In some embodiments a first pane and/or a second pane may be transparent.

In some embodiments a first pane and/or a second pane may be translucent. A translucent pane permits the transmission of light but diffuses it. An example of a translucent pane is a frosted pane.

In some embodiments a first pane and/or a second pane may be opaque.

In some embodiments a first pane and/or a second pane may be non-coloured.

In some embodiments a first pane and/or a second pane may be coloured.

In some embodiments a first pane and/or a second pane may be mirrored.

In some embodiments a first pane and/or a second pane may be patterned.

In some embodiments a first pane and/or a second pane may be extra white.

In some embodiments a first pane and/or a second pane may be ultra-clear.

In some embodiments a first pane and/or a second pane may be transparent, translucent, opaque, non-coloured, coloured, mirrored, patterned, extra white, and/or ultra-clear.

In some embodiments a first pane and/or a second pane may comprise a combination of regions which are independently transparent, translucent, opaque, non-coloured, coloured, mirrored, patterned, extra white, or ultra-clear.

In some embodiments a first pane and/or a second pane may comprise glass.

In some embodiments a first pane and/or a second pane may comprise toughened (i.e. tempered) glass. Toughened glass has the advantage of disintegrating into many small pieces when broken, reducing the risk of injury. It is also more resistant to thermal shock and therefore contributes to the fire-resistant properties of a glazing laminate, as well as a corresponding balustrade's line load strength. Toughened glass may be thermally toughened or chemically toughened. Toughened glass may meet criteria set out in standard EN 12150.

In some embodiments a first pane and/or a second pane may comprise thermally toughened glass.

In some embodiments a first pane and/or a second pane may comprise chemically toughened glass.

In some embodiments a first pane and/or a second pane may comprise coated glass. Coated glass may be hard coated or soft coated.

In some embodiments a first pane and/or a second pane may comprise hard coated glass

In some embodiments a first pane and/or a second pane may comprise soft coated glass.

In some embodiments a first pane and/or a second pane may be flat.

In some embodiments a first pane and/or a second pane may be a sheet.

In some embodiments a first pane and/or a second pane may be curved.

In some embodiments a first pane and/or a second pane may be rectangular.

In some embodiments a first pane and/or a second pane may be about 4 mm to about 19 mm thick.

In some embodiments a first pane and/or a second pane may be about 4 mm to about 15 mm thick.

In some embodiments a first pane and/or a second pane may be about 4 mm to about 10 mm thick.

In some embodiments a first pane and/or a second pane may be about >8 mm thick.

In some embodiments a first pane and/or a second pane may be about 8 mm thick.

In some embodiments a first pane and/or a second pane may be about 10 mm thick.

In some embodiments a first pane and/or a second pane may be about 12 mm thick.

In some embodiments a first pane and/or a second pane may be about 15 mm thick.

In some embodiments a first pane and/or a second pane may be toughened glass which is about 4 mm to about 19 mm thick.

In some embodiments a first pane and/or a second pane may be toughened glass which is about 4 mm to about 15 mm thick.

In some embodiments a first pane and/or a second pane may be toughened glass which is about 4 mm to about 12 mm thick.

In some embodiments a first pane and/or a second pane may be toughened glass which is about 8 mm to about 12 mm thick.

In some embodiments a first pane and/or a second pane may be toughened glass which is about >8 mm thick.

In some embodiments a first pane and/or a second pane may be toughened glass which is about 8 mm thick.

In some embodiments a first pane and/or a second pane may be toughened glass which is about 10 mm thick.

In some embodiments a first pane and/or a second pane may be toughened glass which is about 12 mm thick.

In some embodiments a first pane and/or a second pane may be toughened glass which is about 15 mm thick.

In some embodiments a first pane may be toughened glass which is about 8 mm thick and a second pane may be toughened glass which is about 10 mm thick.

In some embodiments a first pane may be toughened glass which is about 10 mm thick and a second pane may be toughened glass which is about 12 mm thick.

In some embodiments there may be at least one additional pane to the first pane and the second pane (for example a third pane, helping define a triple glazing unit). The additional pane(s) may be adjacent to and spaced apart from (for example in a parallel fashion) any other pane and together with a seal may define an internal space, which may be in addition to any internal space or non-flammable interlayer already present. Such additional internal spaces may comprise a non-flammable interlayer, or alternatively they may be left empty, evacuated, or filled with an alternative substance (e.g. an insulating gas, which may result in an insulating fire-resistant glazing unit).

In any embodiment where there is a first pane and a second pane, and "panes" are also mentioned, "panes" may refer to the first pane and the second pane, or the first pane, second pane, and/or any additional pane.

### Glazing Laminate - Non-flammable Interlayers

In some embodiments a non-flammable interlayer may comprise an alkali metal silicate (for example a potassium silicate).

Alkali metal silicates impart heat-resistant properties to the interlayers in fire safety glazing laminates. They may generally be prepared by mixing nanoparticulate silica dispersions (e.g. Levasil^{®}, or other suitable sources of silica, including solid silica such as fumed silica) with alkali metal hydroxide bases (for example potassium or sodium hydroxide, either as solids or premade solutions for example comprising 50% w/w of base in water). Suitable silica sources may for example have a particle size of 2-200 nm, or may be classed by surface area, for example in the range of 10-200 m²/g.

The formation of alkali metal silicates from silica and alkali metal bases is described by the following equation, where M represents a suitable cation (e.g. a group 1 metal cation such as lithium, sodium or potassium) and n is the molar amount of silica:

nSiO₂ + 2MOH → nSiO₂.M₂O + H₂O

Therefore, a general formula for an alkali metal silicate is SiO₂.M₂O. Potassium silicate has the general formula SiO₂.K₂O.

In some embodiments a non-flammable interlayer may consist essentially of an alkali metal silicate (for example a potassium silicate).

In one embodiment there is provided a balustrade comprising a glazing laminate fixed to a support, the glazing laminate comprising a first pane and a second pane which together enclose a potassium silicate interlayer.

Non-flammable interlayers may be defined in relation to the aqueous compositions used to prepare them. Once synthesised, these aqueous compositions may be used to construct a non-flammable interlayer in a glazing laminate by for example curing at elevated temperature (for example for between 3 and 24 hours at a temperature of 50-100 °C, for 24 hours at a temperature of 50 °C, or for 3 hours at a temperature of 100 °C).

In some embodiments a non-flammable interlayer may be prepared from an aqueous composition comprising:
- About 35% w/w - about 40% w/w SiO₂;
- About 10% w/w - about 15% w/w KOH;
- About 45% w/w - about 50% w/w water; and
- About 1% w/w - about 20% w/w of a polyhydric organic compound.

A suitable polyhydric organic compound includes xylitol, glycerol or the like.

In some embodiments a non-flammable interlayer may be prepared from an aqueous composition comprising:
- About 35.15% w/w SiO₂;
- About 12.75% w/w KOH;
- About 47.63% w/w water; and
- About 4.47% w/w glycerol.

In some embodiments a non-flammable interlayer may be prepared from an aqueous composition comprising:
- About 35% w/w - about 40% w/w SiO₂;
- About 10% w/w - about 15% w/w KOH;
- About 45% w/w - about 50% w/w water; and
- About 1% w/w - about 20% w/w of a polyhydric organic compound;
Which is cured at elevated temperature to form a non-flammable interlayer.

In some embodiments a non-flammable interlayer may be prepared from an aqueous composition comprising:
- About 35.15% w/w SiO₂;
- About 12.75% w/w KOH;
- About 47.63% w/w water; and
- About 4.47% w/w glycerol;
Which is cured at elevated temperature to form a non-flammable interlayer.

In some embodiments a non-flammable interlayer may be about 0.5 mm to about 6 mm thick.

In some embodiments a non-flammable interlayer may be about 3 mm to about 6 mm thick.

In some embodiments a non-flammable interlayer may be about >3 mm thick.

In some embodiments a non-flammable interlayer may be >3 mm thick.

In some embodiments a non-flammable interlayer may be about 3 mm thick.

In some embodiments a non-flammable interlayer may be 3 mm thick.

Suitable non-flammable interlayers may be defined by their rheological properties (for example by reference to their storage modulus, crossover modulus or crossover frequency). These may characterise interlayers particularly suitable to impart the necessary structural properties outlined in the introduction.

In some embodiments a non-flammable interlayer may be characterised by a storage modulus of about 2E+07 Pa to about 9E+07 Pa.

In some embodiments a storage modulus may be measured at 2 Hz.

In some embodiments a non-flammable interlayer may be characterised by a storage modulus of about 5.11E+07 Pa.

The format "E+0X" displays a number in exponential notation, replacing part of the number with E+n, in which E (exponent) multiplies the preceding number by 10 to the n^{th} power.

In some embodiments a non-flammable interlayer may be characterised by a crossover modulus of about 8E+06 Pa to about 3E+07 Pa.

In some embodiments a non-flammable interlayer may be characterised by a crossover modulus of about 1.19E+07 Pa.

In some embodiments a non-flammable interlayer may be characterised by a crossover frequency of about 0.05 Hz to about 0.25 Hz.

In some embodiments a non-flammable interlayer may be characterised by a crossover frequency of about 0.063 Hz.

Suitable non-flammable interlayers may also be defined by other physical properties such as Shore A hardness.

In some embodiments a non-flammable interlayer may be characterised by a Shore A hardness of about >75.

In some embodiments a non-flammable interlayer may be characterised by a Shore A hardness of ≥75.

In some embodiments a non-flammable interlayer may be characterised by a Shore A hardness of about >90.

In some embodiments a non-flammable interlayer may be characterised by a Shore A hardness of ≥90.

In some embodiments a non-flammable interlayer may be characterised by a Shore A hardness of about 75 to about 100.

In some embodiments a non-flammable interlayer may be characterised by a Shore A hardness of about 90 to about 100.

In some embodiments a non-flammable interlayer may be characterised by a Shore A hardness of about 93.

In some embodiments a non-flammable interlayer may be characterised by:
- A storage modulus measured at 2Hz of about 2E+07 Pa to about 9E+07 Pa;
- A crossover modulus of about 8E+06 Pa to about 3E+07 Pa;
- A crossover frequency of about 0.05 Hz to about 0.25 Hz; and
- A Shore A hardness of about >75.

In some embodiments a non-flammable interlayer may be characterised by:
- A storage modulus measured at 2Hz of about 5.11E+07 Pa;
- A crossover modulus of about 1.19E+07 Pa;
- A crossover frequency of about 0.063 Hz; and
- A Shore A hardness of about 93.

In some embodiments a storage modulus, crossover modulus, crossover frequency or Shore A Hardness may be measured according to the methods disclosed in this specification.

### Glazing Laminate - Seals

In some embodiments a glazing laminate may comprise a seal which together with the first pane and the second pane encloses the non-flammable interlayer.

A "seal" is any element or means which can be arranged with at least two panes (for example a first pane and a second pane) to define an internal space.

Seals may be any suitable dimension, for example elongate. Seals may be flexible and may be moulded into any desired shape, for example being adapted to complement a given pane or glazing laminate geometry (for example being substantially rectangular where the pane or glazing laminate is rectangular). Seals may be positioned in any suitable position relative to the outer edge of the panes they are arranged with. Panes may overlap or overhang a seal.

Seals of different dimensions may be used, for example seals with a length corresponding to about that of the perimeter of the glazing laminate they seal, or with a width, depth and/or height of about 0.1-15 mm, about 1-15 mm, about 5-25 mm, about 10-25 mm, about 3 mm, about 5 mm, about 13 mm or about 15 mm. A seal's width, depth or height may be about the same or greater than the corresponding dimension of the glazing laminate sealed (for example about 0.1-15 mm, about 1-15 mm, about 5-25 mm, about 10-25 mm, about 3 mm, about 5 mm, about 13 mm or about 15 mm).

When a seal "encloses" an element (such as a non-flammable interlayer) it may mean that the element is held in an essentially air-tight internal space.

In some embodiments a seal may be essentially air-tight. An essentially air-tight seal is one that permits only minimal gas exchange.

In some embodiments a seal may be air-tight. An air-tight seal permits no measurable gas exchange.

In some embodiments a seal may be non-porous.

In some embodiments a seal may comprise a polysulphide polymer.

In some embodiments a seal may comprise a polyurethane polymer.

In some embodiments a seal may comprise a butyl polymer.

In some embodiments a seal may comprise a silicone polymer.

In some embodiments a seal may comprise a silyl modified polyether polymer (for example an MS polymer).

In some embodiments a seal may comprise a silyl modified polyurethane polymer (for example a SPUR polymer).

In some embodiments a seal may comprise a polysulphide polymer, a polyurethane polymer, a butyl polymer, a silicone polymer, a silyl modified polyether polymer and/or a silyl modified polyurethane polymer.

In some embodiments a glazing laminate may be surrounded by a non-structural capping (for example using a U-shaped metallic strip designed to dovetail with a laminate's outer edge). Such cappings may surround the outer seal or outer edge of a glazing laminate to prevent edge damage from impact or environmental factors (e.g. ingress of water, or UV degradation of the seal).

### Glazing Laminate - Spacers

In some embodiments a glazing laminate may comprise a spacer.

A "spacer" is an element used to hold apart panes to help maintain the structural arrangement of a glazing laminate, both during manufacture and normal use. Spacers may comprise any suitable material (for example a suitable polymer material) and may be reinforced to help them perform their function better. Spacers are located in the internal spaces defined by panes, for example internal spaces filled with a non-flammable interlayer.

A seal may perform the same function as a spacer, and *vice versa.* For example, a suitable spacer can both hold panes apart in a suitably opposed configuration and together with those panes define an internal space (one filled for example with a non-flammable interlayer).

In some embodiments a spacer may comprise acrylonitrile butadiene styrene, nylon, polytetrafluoroethylene, polypropylene, polyethylene, high density polyethylene, polyurethane, silicone, polyester, stainless steel, titanium, polypropylene, polyethylene and/or epoxy resin; or be a thermoplastic or thermosetting plastic spacer.

In some embodiments a spacer may consist essentially of acrylonitrile butadiene styrene.

In some embodiments a spacer may be a thermoplastic or a thermosetting plastic spacer.

In some embodiments a spacer may be a thermoplastic spacer (for example a polyisobutylene spacer, such as IGK 611, or TPS^{®} https://www.bystronic-glass.com/wp-content/uploads/2014/11/BYGL-TPS-Brochure-EN.pdf).

In some embodiments a spacer may be a thermosetting plastic spacer.

In some embodiments a spacer may be a thermosetting plastic spacer.

In some embodiments a spacer may be reinforced with glass fibre or glass particles.

### Glazing Laminate - Specific Embodiments

In some embodiments a glazing laminate may comprise a first pane and a second pane which are both toughened glass and together enclose a potassium silicate interlayer.

In some embodiments a glazing laminate may comprise a first pane and a second pane which are both toughened glass about >4mm thick and together enclose a potassium silicate interlayer.

In some embodiments a glazing laminate may comprise a first pane and a second pane which are both toughened glass about >8mm thick and together enclose a potassium silicate interlayer.

In some embodiments a glazing laminate may comprise a first pane and a second pane which are both toughened glass about 8mm thick and together enclose a potassium silicate interlayer which is about >3 mm thick.

In some embodiments a glazing laminate may comprise a first pane and a second pane which are both toughened glass ≥8mm thick and together enclose a potassium silicate interlayer.

In some embodiments a glazing laminate may comprise a first pane and a second pane which are both toughened glass ≥8mm thick and together enclose a potassium silicate interlayer which is ≥3 mm thick.

In some embodiments a glazing laminate may comprise a first pane and a second pane which are both toughened glass about 8mm thick and together enclose a potassium silicate interlayer.

In some embodiments a glazing laminate may comprise a first pane and a second pane which are both toughened glass about 8mm thick and together enclose a potassium silicate interlayer which is about >1 mm thick.

In some embodiments a glazing laminate may comprise a first pane and a second pane which are both toughened glass about 8mm thick and together enclose a potassium silicate interlayer which is about 3 mm thick.

In one embodiment there is provided a balustrade comprising a glazing laminate fixed to a support, the glazing laminate comprising a first pane and a second pane which together enclose a potassium silicate interlayer.

### Constructions/Uses

In one embodiment there is provided a construction comprising a balustrade comprising a glazing laminate fixed to a support, the glazing laminate comprising a first pane and a second pane which together enclose a non-flammable interlayer.

In one embodiment there is provided a construction comprising any balustrade embodied in this specification.

In one embodiment there is provided the use of a balustrade comprising a glazing laminate fixed to a support, the glazing laminate comprising a first pane and a second pane which together enclose a non-flammable interlayer, in construction.

In one embodiment there is provided the use of any balustrade embodied in this specification in construction.

In one embodiment there is provided the use of a glazing laminate comprising a first pane and a second pane which together enclose a non-flammable interlayer in balustrade construction.

In one embodiment there is provided the use of any glazing laminate embodied in this specification in balustrade construction.

### Balustrade - Combined Embodiments

In one embodiment there is provided a balustrade comprising a glazing laminate fixed to a support, the glazing laminate comprising a first pane and a second pane which together enclose a non-flammable interlayer, where:
- The support comprises a U-shaped channel;
- The first pane and the second pane are both toughened glass which is about 4 mm to about 19 mm thick; and
- The non-flammable interlayer comprises an alkali metal silicate about 0.5 mm to about 6 mm thick.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both the same, being toughened glass which is about 4 mm to about 19 mm thick; and
- The non-flammable interlayer comprises a potassium silicate about 0.5 mm to about 6 mm thick.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both the same, being toughened glass which is about >8 mm thick; and
- The non-flammable interlayer comprises a potassium silicate about >3 mm thick.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both the same, being toughened glass which is about 8 mm thick; and
- The non-flammable interlayer comprises a potassium silicate about 3 mm thick.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both toughened glass which is about 4 mm to about 19 mm thick;
- The non-flammable interlayer comprises a potassium silicate about 3 mm thick; and
- The glazing laminate is fixed to the support using clips, clamps, squeeze fittings, bonding material, packing, packers, adhesive tapes, liners and/or beading.

In one embodiment there is provided a balustrade comprising a glazing laminate fixed to a support, the glazing laminate comprising a first pane and a second pane which together enclose a non-flammable interlayer, where:
- The support is an aluminium block shoe comprising a U-shaped channel;
- The first pane and the second pane are both the same, being toughened glass which is about 8 mm thick;
- The non-flammable interlayer comprises a potassium silicate about 3 mm thick; and
- The glazing laminate is fixed to the support using clips, clamps, squeeze fittings, bonding material, packing, packers, adhesive tapes, liners and/or beading.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both toughened glass which is about 4 mm to about 19 mm thick; and
- The non-flammable interlayer comprises a potassium silicate about 3 mm thick prepared from an aqueous composition comprising:
   - About 35% w/w - about 40% w/w SiO₂;
   - About 10% w/w - about 15% w/w KOH;
   - About 45% w/w - about 50% w/w water; and
   - About 1% w/w - about 20% w/w of a polyhydric organic compound.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both the same, being toughened glass which is about 8 mm thick; and
- The non-flammable interlayer comprises a potassium silicate about 3 mm thick prepared from an aqueous composition comprising:
   - About 35.15% w/w SiO₂;
   - About 12.75% w/w KOH;
   - About 47.63% w/w water; and
   - About 4.47% w/w glycerol.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both toughened glass which is about 4 mm to about 19 mm thick;
- The non-flammable interlayer comprises a potassium silicate about 3 mm thick prepared from an aqueous composition comprising:
   - About 35% w/w - about 40% w/w SiO₂;
   - About 10% w/w - about 15% w/w KOH;
   - About 45% w/w - about 50% w/w water; and
   - About 1% w/w - about 20% w/w of a polyhydric organic compound; and
- The glazing laminate is fixed to the support using clips, clamps, squeeze fittings, bonding material, packing, packers, adhesive tapes, liners and/or beading.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both toughened glass which is about 4 mm to about 19 mm thick; and
- The non-flammable interlayer comprises an alkali metal silicate about 0.5 mm to about 6 mm thick characterised by:
   - A storage modulus measured at 2Hz of about 2E+07 Pa to about 9E+07 Pa;
   - A crossover modulus of about 8E+06 Pa to about 3E+07 Pa;
   - A crossover frequency of about 0.05 Hz to about 0.25 Hz; and/or
   - A Shore A hardness of about >75.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both the same, being toughened glass which is about 8 mm to about 12 mm thick; and
- The non-flammable interlayer comprises a potassium silicate about 3 mm thick characterised by:
   - A storage modulus measured at 2Hz of about 2E+07 Pa to about 9E+07 Pa;
   - A crossover modulus of about 8E+06 Pa to about 3E+07 Pa;
   - A crossover frequency of about 0.05 Hz to about 0.25 Hz; and/or
   - A Shore A hardness of about >75.

In one embodiment there is provided a balustrade comprising a glazing laminate fixed to a support, the glazing laminate comprising a first pane and a second pane which together enclose a non-flammable interlayer, where:
- The support comprises a U-shaped channel;
- The first pane and the second pane are both the same, being toughened glass which is about 8 mm to about 12 mm thick; and
- The non-flammable interlayer consists essentially of a potassium silicate about 3 mm thick characterised by:
   - A storage modulus measured at 2Hz of about 2E+07 Pa to about 9E+07 Pa;
   - A crossover modulus of about 8E+06 Pa to about 3E+07 Pa;
   - A crossover frequency of about 0.05 Hz to about 0.25 Hz; and/or
   - A Shore A hardness of about >75.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both the same, being toughened glass which is about 8 mm to about 12 mm thick; and
- The non-flammable interlayer consists essentially of a potassium silicate about 3 mm thick characterised by:
   - A storage modulus measured at 2Hz of about 2E+07 Pa to about 9E+07 Pa;
   - A crossover modulus of about 8E+06 Pa to about 3E+07 Pa;
   - A crossover frequency of about 0.05 Hz to about 0.25 Hz; and/or
   - A Shore A hardness of about >75; and
- The glazing laminate is fixed to the support using clips, clamps, squeeze fittings, bonding material, packing, packers, adhesive tapes, liners and/or beading.

In one embodiment there is provided a balustrade comprising a glazing laminate fixed to a support, the glazing laminate comprising a first pane and a second pane which together enclose a non-flammable interlayer, where:
- The support is a block shoe comprising a U-shaped channel;
- The first pane and the second pane are both the same, being toughened glass which is about 8 mm to about 12 mm thick; and
- The non-flammable interlayer consists essentially of a potassium silicate about 3 mm thick characterised by:
   - A storage modulus measured at 2Hz of about 5.11E+07 Pa;
   - A crossover modulus of about 1.19E+07 Pa;
   - A crossover frequency of about 0.063 Hz;
   - A Shore A hardness of about 93; and
- The glazing laminate is fixed to the support using clips, clamps, squeeze fittings, bonding material, packing, packers, adhesive tapes, liners and/or beading.

In one embodiment there is provided a balustrade comprising a glazing laminate fixed to a support, the glazing laminate comprising a first pane and a second pane which together enclose a non-flammable interlayer, where:
- The support is an aluminium block shoe comprising a U-shaped channel adapted to receive the lower edge of a glazing laminate;
- The first pane and the second pane are both the same, being toughened glass which is about 8 mm to about 12 mm thick; and
- The non-flammable interlayer consists essentially of a potassium silicate about 3 mm thick prepared from an aqueous composition comprising:
   - About 35% w/w - about 40% w/w SiO₂;
   - About 10% w/w - about 15% w/w KOH;
   - About 45% w/w - about 50% w/w water; and
   - About 1% w/w - about 20% w/w of a polyhydric organic compound;
- Which non-flammable interlayer is characterised by:
   - A storage modulus measured at 2Hz of about 2E+07 Pa to about 9E+07 Pa;
   - A crossover modulus of about 8E+06 Pa to about 3E+07 Pa;
   - A crossover frequency of about 0.05 Hz to about 0.25 Hz; and/or
   - A Shore A hardness of about >90; and
- The glazing laminate is fixed to the support using clips, clamps, squeeze fittings, bonding material, packing, packers, adhesive tapes, liners and/or beading.

In one embodiment there is provided a balustrade comprising a glazing laminate fixed to a support, the glazing laminate comprising a first pane and a second pane which together enclose a non-flammable interlayer, where:
- The support is an aluminium block shoe comprising a U-shaped channel adapted to receive the lower edge of a glazing laminate;
- The first pane and the second pane are both the same, being toughened glass which is about 8 mm to about 12 mm thick; and
- The non-flammable interlayer consists essentially of a potassium silicate about 3 mm thick prepared from an aqueous composition comprising:
   - About 35.15% w/w SiO₂;
   - About 12.75% w/w KOH;
   - About 47.63% w/w water; and
   - About 4.47% w/w glycerol.
- Which non-flammable interlayer is characterised by:
   - A storage modulus measured at 2Hz of about 2E+07 Pa to about 9E+07 Pa;
   - A crossover modulus of about 8E+06 Pa to about 3E+07 Pa;
   - A crossover frequency of about 0.05 Hz to about 0.25 Hz; and/or
   - A Shore A hardness of about >90; and
- The glazing laminate is fixed to the support using clips, clamps, squeeze fittings, bonding material, packing, packers, adhesive tapes, liners and/or beading.

In one embodiment there is provided a balustrade comprising a glazing laminate fixed to a support, the glazing laminate comprising a first pane and a second pane which together enclose a non-flammable interlayer, where:
- The support is an aluminium block shoe comprising a U-shaped channel adapted to receive the lower edge of a glazing laminate;
- The first pane and the second pane are both the same, being toughened glass which is about 8 mm thick; and
- The non-flammable interlayer consists essentially of a potassium silicate about 3 mm thick prepared from an aqueous composition comprising:
   - About 35% w/w - about 40% w/w SiO₂;
   - About 10% w/w - about 15% w/w KOH;
   - About 45% w/w - about 50% w/w water; and
   - About 1% w/w - about 20% w/w of a polyhydric organic compound;
- Which non-flammable interlayer is characterised by:
   - A storage modulus measured at 2Hz of about 2E+07 Pa to about 9E+07 Pa;
   - A crossover modulus of about 8E+06 Pa to about 3E+07 Pa;
   - A crossover frequency of about 0.05 Hz to about 0.25 Hz; and/or
   - A Shore A hardness of about >90; and
- The glazing laminate is fixed to the support using clips, clamps, squeeze fittings, bonding material, packing, packers, adhesive tapes, liners and/or beading.

In some embodiments a balustrade and/or glazing laminate may meet the requirements of EN 1991-1-1, EN 12600 1B1, UNE EN ISO 1716:2011 and/or UN EN 13823:2012+A1:2016.

In some embodiments a balustrade and/or glazing laminate may achieve at least an A2 grade under BS EN 13501-1 when tested according to UNE-EN ISO 1716:2011 and/or UNE-EN 13823:2012+A1:2016.

In some embodiments a balustrade and/or glazing laminate may achieve at least an A2-s1,d0 grade under BS EN 13501-1 when tested according to UNE-EN ISO 1716:2011 and/or UNE-EN 13823:2012+A1:2016.

### FIGURES

Figure 1: Cross-sectional view of a glazing laminate.
Figure 2: Cross-sectional view of a free-standing balustrade section, featuring a glazing laminate located in the U-shaped channel of a support.

### DETAILED DESCRIPTION

Balustrades and glazing laminates described in this specification may be prepared by methods known in the art, for example those described in US2213468 [LIBBEY OWENS], US3759771 [BATTERSBY], US2389360 [CORNING], WO2015/025159 [PYROGUARD], WO2009/003431 [BANGRATZ], WO2020/069983 [SCHLOGL], DE202014100163U1 [Q-RAILING] and Architectural Glazing Systems Chapter 7, "Guidelines for the Use of Glass in Protective Barriers", Glass and Glazing Federation November 2014. The content of these publications is incorporated in this specification by reference.

Unless otherwise mentioned, experiments and processes were carried out under ambient conditions (for example 1 atmosphere pressure, 25 °C).

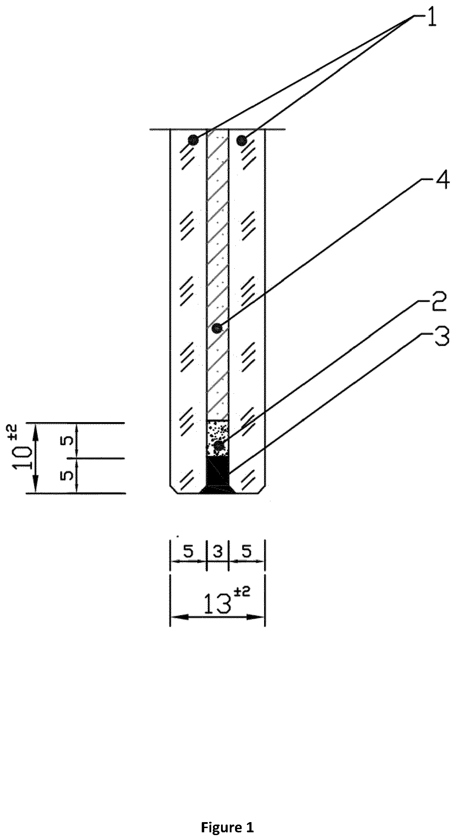

A suitable glazing laminate for use in the balustrades described in this specification is represented cross-sectionally in figure 1. The laminate comprises a first pane and a second pane 1 which are the same, both consisting of toughened glass (for example EN 12150 conforming toughened glass) 5 mm thick. The first pane and second pane enclose a 3 mm thick non-flammable potassium silicate interlayer 4 together with perimeter seal 3, which is constructed of polysulphide (for example Kommerling polysulphide M82). The glazing laminate also features a spacer 2 (for example made of IGK 611) adjacent to the outer seal 3.

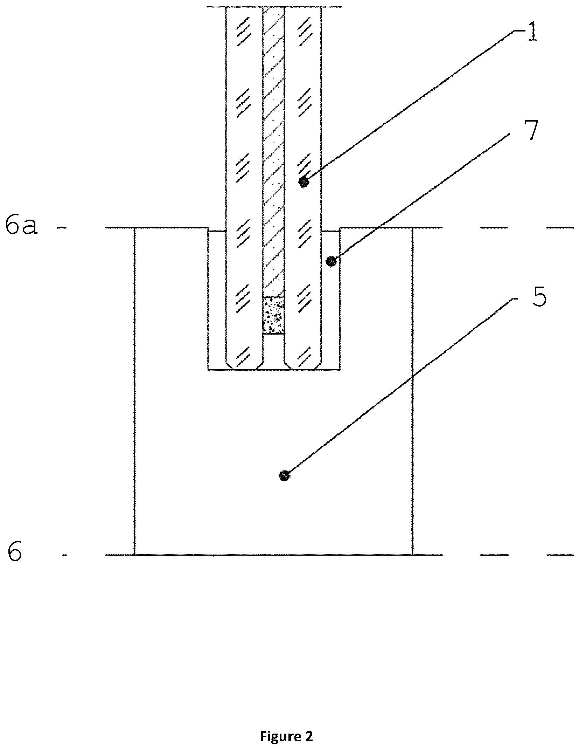

Figure 2 shows the use of a laminate represented in Figure 1 as part of a balustrade construction. Support 5 is a block shoe constructed from aluminium (for example a Q-railing^{®} Easy Glass Prime^{®} base shoe) which may be fixed to a floor surface 6 or sunk (and fixed) into a suitable floor recess 6a. Attachment of the block shoe to the floor surface can be effected by bolting or other suitable means (not shown). Support 5 comprises a U-shaped channel designed to receive the lower edge of a glazing laminate such as that shown in Figure 1. As well as being fixed to the U-shaped channel, the laminate is firmly situated in the channel using packing material 7 (for example a suitable gasket arrangement).

### Example 1: Laminate Preparation

Various aqueous compositions were prepared to be used as interlayer precursors. Table 1 shows the compositions of the interlayers in terms of their raw components.

Compositions were prepared as a two-component mix. The first, silica-based component was prepared by mixing a silica sol with glycerol and distilling to reach the desired water content. The second component was made by preparing an aqueous metal hydroxide solution (50% w/w). The two components were then vigorously mixed under reduced pressure while controlling the temperature. The mixture was heated for 30 minutes then rapidly cooled to 25°C, retarding further reaction.

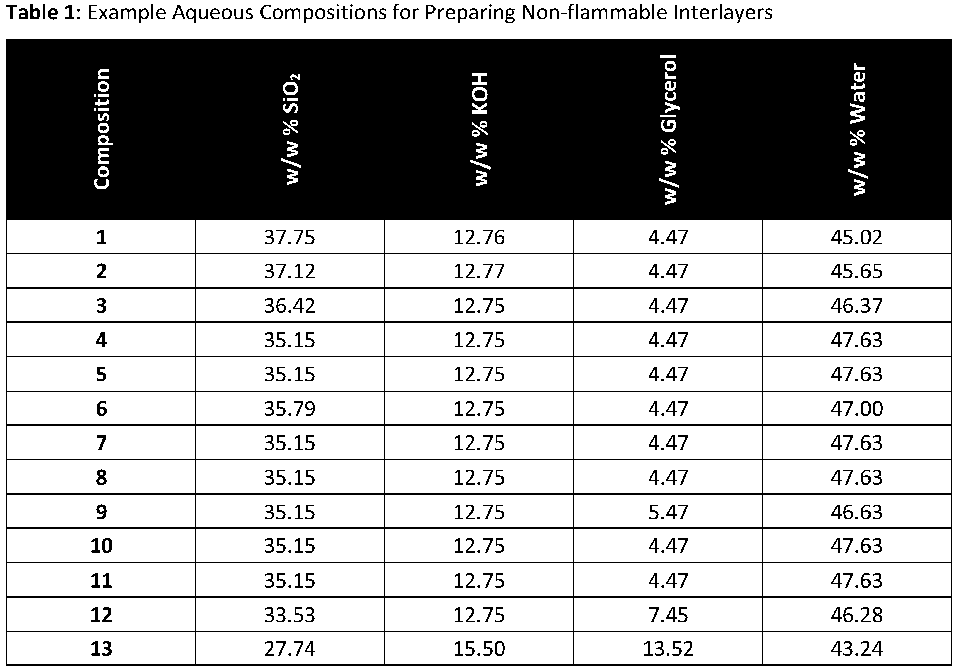

Aqueous compositions 1 to 13 were used to prepare non-flammable interlayers and corresponding glazing laminates by the following basic method.

The relevant aqueous mixtures were poured or pumped between suitably arranged glass sheets (for example two panes held apart by a suitable spacer or seal) and cured at elevated temperature for between 3 and 24 hours at a temperature of 50-100 °C to convert the aqueous composition to a non-flammable interlayer and produce the desired laminates.

Table 2 represents the physical properties of the resultant interlayers. Interlayer 1 corresponds to composition 1, Interlayer 2 corresponds to composition 2 and so on.

The rheological properties of the interlayers were determined using a TA Instruments rheometer equipped with torsion clamp geometry and an environmental test chamber (ETC). Measurements were taken at a temperature of 25 °C, strain of 0.02% and in the frequency range of 20 to 8.0E-03 Hz, with 5 data points measured per decade. Storage modulus values were then recorded at a 2 Hz setting.

A Zwick Roell 3115 Durometer was used for measuring Shore A Hardness values at 25 °C. Each test material was placed on a flat surface and the durometer was pressed against the material. After indentation had occurred, a final reading was taken. The test was repeated 3 times and an average value was adopted.

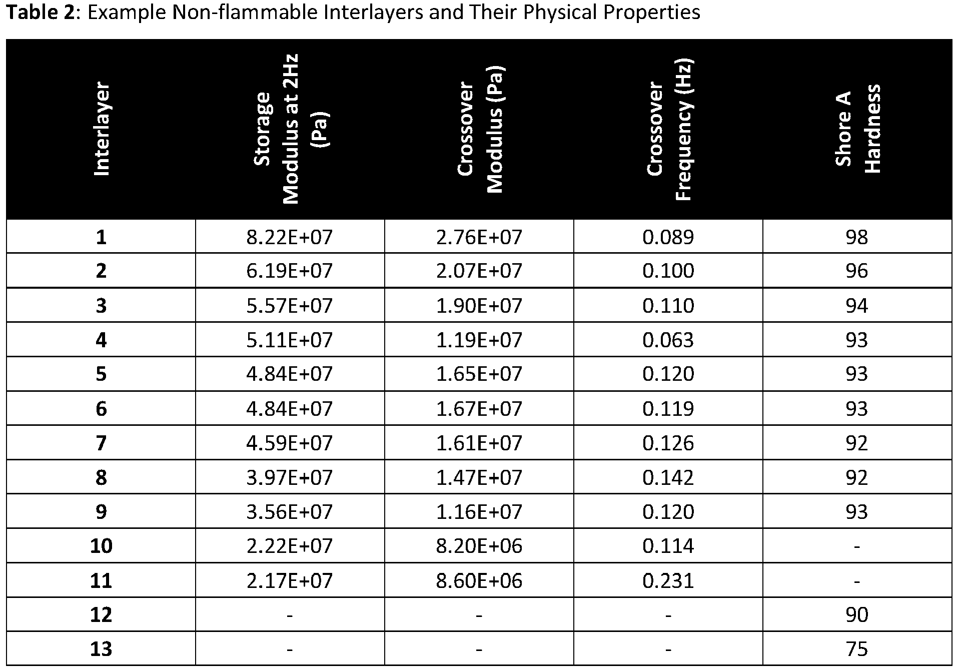

### Example 2: Glazing Laminate Reaction to Fire-Testing

Reaction to fire testing classification of laminates was carried out by determining the gross heat of combustion (calorific value) of each component in the laminates and by conducting the single item burning test.

The calorific value determination of the individual components in the glazing laminates was carried out according to EN ISO 1716:2011. In this, the gross heat of combustion of each homogeneous component was measured separately in a bomb calorimeter (using approximately 100g of each component).

The single item burning tests were carried out according to EN 13823:2012+A1:2016. For this, test specimens of each glazing laminate were made having dimensions of 1500×100mm and 1500x495mm. Panels of each laminate product were then installed in the single burning item room, while using an air gap of 80mm to the test specimens. No substrates were used.

### Example 3: Balustrade Load Testing

Balustrade load testing was carried out in accordance with BS 6180:2011. Equipment used included a hydraulic ram; a hydraulic hand pump; a load cell; a linear voltage displacement transducer and an appropriate scaffold to support the balustrade arrangement.

As a support, a concrete block was bolted to the laboratory floor. The concrete block was engineered to include a U-shaped channel to house a glazing laminate made in a 10/3/10 construction (i.e. two identical 10 mm thick toughened glass panes enclosing a 3mm non-flammable interlayer) and dimension 1000mm × 1250 mm which was fixed to the concrete block using anchor fixings. Each glass panel was installed into the U-channel of the support using packers evenly spread across the base of the glass panel. A reaction frame was fastened to the laboratory floor such that a hydraulic ram could be clamped to the steel cross-member at the required height per the test programme.

The load cell, used to record the force applied to the barrier, was connected to the end of the hydraulic ram and a hydraulic hand pump was connected to the ram. A separate scaffold framework was constructed to hold the linear voltage displacement transducers to measure the deflection of the balustrade during loading at the same height as the loading arrangement. The load cell and LVDT were connected to a data logger, which in turn was connected to a laptop to record data during testing.

A timber spreader, spanning the entire width of the glass panel being tested, was held at the required height per the test programme. A load was steadily applied to the barrier *via* the timber spreader, until such a time as the target force per meter width of the balustrade was achieved. The deflection was then recorded at this point and the load increased until such a point as the maximum (25 mm) deflection was achieved. The load was then removed.

The minimum target used in this work for use of a free-standing balustrade is that the deflection following the addition of a load remained below 25mm and that the load, applied as a line load 0.74 kN/m, point load 0.5kN or spread load 0.5 kN/m. These values are taken from Table 2 of BS 6180:2011. Those free-standing glazed balustrades described in this patent (for example comprising interlayers as described in the Examples) were able to meet these criteria, as were Juliet type balustrades (i.e. balustrades around a Juliet balcony).

### Specific Embodiments

A balustrade comprising a glazing laminate fixed to a support, the glazing laminate comprising a first pane and a second pane which together enclose a non-flammable interlayer.

A balustrade as described in specific embodiment [216] where the non-flammable interlayer comprises an alkali metal silicate.

A balustrade as described in specific embodiment [217] where the alkali metal silicate is a potassium silicate.

A balustrade as claimed in any of the preceding specific embodiments where the non-flammable interlayer is characterised by a storage modulus measured at 2Hz of about 2E+07 Pa to about 9E+07 Pa.

A balustrade as described in specific embodiment [219] where the non-flammable interlayer is characterised by a storage modulus measured at 2Hz of about 5.11E+07 Pa.

A balustrade as claimed in any of the preceding specific embodiments where the non-flammable interlayer is characterised by a crossover modulus of about 8E+06 Pa to about 3E+07 Pa.

A balustrade as described in specific embodiment [221] where the non-flammable interlayer is characterised by a crossover modulus of about 1.19E+07 Pa.

A balustrade as claimed in any of the preceding specific embodiments where the non-flammable interlayer is characterised by a crossover frequency of about 0.05 Hz to about 0.25 Hz.

A balustrade as described in specific embodiment [223] where the non-flammable interlayer is characterised by a crossover frequency of about 0.063 Hz.

A balustrade as claimed in any of the preceding specific embodiments where the non-flammable interlayer is characterised by a Shore A hardness of about >75.

A balustrade as described in specific embodiment [225] where the non-flammable interlayer is characterised by a Shore A hardness of about 90 to about 100.

A balustrade as claimed in any of the preceding specific embodiments where the non-flammable interlayer is characterised by:
- A storage modulus measured at 2Hz of about 2E+07 Pa to about 9E+07 Pa;
- A crossover modulus of about 8E+06 Pa to about 3E+07 Pa;
- A crossover frequency of about 0.05 Hz to about 0.25 Hz; and
- A Shore A hardness of about >75.

A balustrade as claimed in any of the preceding specific embodiments where the non-flammable interlayer is prepared from an aqueous composition comprising:
- About 35% w/w - about 40% w/w SiO₂;
- About 10% w/w - about 15% w/w KOH;
- About 45% w/w - about 50% w/w water; and
- About 1% w/w - about 20% w/w of a polyhydric organic compound.

A balustrade as described in any of the preceding specific embodiments where the non-flammable interlayer is prepared by curing the aqueous composition at elevated temperature.

A balustrade as claimed in any of the preceding specific embodiments where the non-flammable interlayer is about 0.5 mm to about 6 mm thick.

A balustrade as claimed in any of the preceding specific embodiments where the support comprises a U-shaped channel adapted to receive the lower edge of a glazing laminate.

A balustrade as described in specific embodiment [231] where the support is concrete, brick, plastic, stainless steel or aluminium.

A balustrade as described in specific embodiment [231] or specific embodiment [232] where the glazing laminate is fixed into the U-shaped channel using clips, clamps, squeeze fittings, bonding material, packing, packers, adhesive tapes, liners and/or beading.

A balustrade as claimed in any of the preceding specific embodiments where the first pane and/or the second pane are toughened glass.

A balustrade as claimed in any of the preceding specific embodiments where the first pane and/or the second pane are about 4 mm to about 19 mm thick, about 8mm thick, about 10 mm thick or about 12 mm thick.

A balustrade as claimed in any of the preceding specific embodiments where the glazing laminate is surrounded by a non-structural capping.

A balustrade as claimed in any of the preceding specific embodiments where the glazing laminate comprises a seal which together with the first pane and the second pane encloses the non-flammable interlayer.

A balustrade as claimed in any of the preceding specific embodiments where the balustrade comprises a handrail.

A construction comprising a balustrade as claimed in any of the preceding specific embodiments.

The use of a glazing laminate comprising a first pane and a second pane which together enclose a non-flammable interlayer in balustrade construction.

## Claims

1. A balustrade comprising a glazing laminate fixed to a support, the glazing laminate comprising a first pane and a second pane which together enclose a non-flammable interlayer.

2. A balustrade as claimed in claim 1 where the where the non-flammable interlayer comprises an alkali metal silicate.

3. A balustrade as claimed in claim 1 or claim 2 where the non-flammable interlayer is **characterised by** a storage modulus measured at 2Hz of about 2E+07 Pa to about 9E+07 Pa.

4. A balustrade as claimed in any of the preceding claims where the non-flammable interlayer is **characterised by** a crossover modulus of about 8E+06 Pa to about 3E+07 Pa.

5. A balustrade as claimed in any of the preceding claims where the non-flammable interlayer is **characterised by** a crossover frequency of about 0.05 Hz to about 0.25 Hz.

6. A balustrade as claimed in any of the preceding claims where the non-flammable interlayer is **characterised by** a Shore A hardness of about >75.

7. A balustrade as claimed in any of the preceding claims where the non-flammable interlayer is **characterised by**:
- A storage modulus measured at 2Hz of about 2E+07 Pa to about 9E+07 Pa;
- A crossover modulus of about 8E+06 Pa to about 3E+07 Pa;
- A crossover frequency of about 0.05 Hz to about 0.25 Hz; and
- A Shore A hardness of about >75.

8. A balustrade as claimed in any of the preceding claims where the non-flammable interlayer is prepared from an aqueous composition comprising:
- About 35% w/w - about 40% w/w SiO₂;
- About 10% w/w - about 15% w/w KOH;
- About 45% w/w - about 50% w/w water; and
- About 1% w/w - about 20% w/w of a polyhydric organic compound.

9. A balustrade as claimed in any of the preceding claims where the non-flammable interlayer is about 0.5 mm to about 6 mm thick.

10. A balustrade as claimed in any of the preceding claims where the support comprises a U-shaped channel adapted to receive the lower edge of a glazing laminate.

11. A balustrade as claimed in claim 10 where the glazing laminate is fixed into the U-shaped channel using clips, clamps, squeeze fittings, bonding material, packing, packers, adhesive tapes, liners and/or beading.

12. A balustrade as claimed in any of the preceding claims where the first pane and/or the second pane are toughened glass.

13. A balustrade as claimed in any of the preceding claims where the first pane and/or the second pane are about 4 mm to about 19 mm thick, about 8mm thick, about 10 mm thick, about 12 mm thick or about 15mm thick.

14. A construction comprising a balustrade as claimed in any of the preceding claims.

15. The use of a glazing laminate comprising a first pane and a second pane which together enclose a non-flammable interlayer in balustrade construction.
